**Europäisches Patentamt**

**European Patent Office**

**Office européen des brevets**

(19)

(11) Numéro de publication : **0 064 446 B1**

# (12) FASCICULE DE BREVET EUROPÉEN

(45) Date de publication du fascicule du brevet :
28.05.86

(21) Numéro de dépôt : 82400725.6

(22) Date de dépôt : 22.04.82

(51) Int. Cl.⁴ : **G 21 C 17/10**

(54) **Dispositif de mesure de génération locale de puissance dans un réacteur nucléaire et procédé de calibrage d'un tel dispositif.**

(30) Priorité : 24.04.81 US 256992
23.06.81 US 276526

(43) Date de publication de la demande :
10.11.82 Bulletin 82/45

(45) Mention de la délivrance du brevet :
28.05.86 Bulletin 86/22

(84) Etats contractants désignés :
BE DE FR GB IT SE

(56) Documents cités :
FR-A- 2 420 827
FR-A- 2 458 878
GB-A- 2 018 421
GB-A- 2 054 840
IEEE TRANSACTIONS ON NUCLEAR SCIENCE, vol.
NS-26, no. 1, février 1979, NEW YORK (US), R.H.
LEYSE et al.: "Gamma thermometer developments
for light water reactors", pages 934-943

(73) Titulaire : **ELECTRICITE DE FRANCE Service National
2, rue Louis Murat
F-75008 Paris (FR)**

(72) Inventeur : **Smith, Robert D.
9211 Bardon Road
Bethesda Maryland 20014 (US)**
Inventeur : **Rolstad, Eric
Midstuveien 2
N-1750 Halden (NO)**

(74) Mandataire : **Fort, Jacques et al
CABINET PLASSERAUD 84, rue d'Amsterdam
F-75009 Paris (FR)**

### Description

La présente invention a pour objet un dispositif insérable dans le cœur d'un réacteur, sensible à la chaleur dissipée par le rayonnement γ, de façon à mesurer la puissance locale générée dans le cœur.

Le document FR-A-2 420 827 décrit, entre autres, un tel dispositif du type comprenant un corps en matériau conducteur de la chaleur et de l'électricité, absorbant le rayonnement γ, de forme allongée suivant un axe, ayant une surface externe, formant puits de chaleur, en contact direct avec le réfrigérant du réacteur, ledit corps étant percé d'un passage central dans lequel sont placés des moyens à thermocouple comportant des jonctions de mesure de différence de température en plusieurs zones de mesure locale, réparties le long de l'axe, le corps présentant, dans chacune des zones de mesure, une partie de diamètre réduit du corps allongé pour créer une perturbation de la résistance thermique électrique du corps se traduisant par un écoulement thermique radial dans la région desdits moyens et par une différence de température fonction de la puissance locale entre les jonctions. La jonction froide étant alignée avec la partie de diamètre réduit et la jonction chaude étant placée en face d'une partie du corps située à proximité de la perturbation c'est-à-dire de la partie à section réduite. Un tel détecteur, à flux thermique radial, présente sur les détecteurs à écoulement thermique axial dont le corps est enfermé dans un tube externe formant puits de chaleur et en contact thermique avec la partie de diamètre externe constant du corps allongé, un certain nombre d'avantages. Les problèmes de fiabilité du signal, par suite des pertes thermiques de la brèche, provoquées par la détérioration de la résistance thermique élevée dans la brèche et des écarts de température de puits de chaleur dus à un mauvais contact entre le corps et le tube formant puits de chaleur externe, sont écartés. Il n'y a plus de risque de détérioration de la résistance thermique de la brèche axiale enfermée et d'apparition de mauvais contacts entre le corps chauffant et le tube externe formant puits de chaleur. En contrepartie, l'absence de tube externe formant puits de chaleur donne au dispositif un manque de robustesse qui, en dépit du fait qu'il ne s'agit pas d'un élément de structure, a des conséquences néfastes. L'invention vise notamment à écarter ce défaut sans pour autant affecter de façon appréciable la précision et la fiabilité de la mesure.

Dans ce but l'invention propose un dispositif du type ci-dessus défini, qui comprend des ailettes de renforcement en matériau à conductivité thermique élevée, s'étendant radialement à partir des parties de diamètre réduit. On peut choisir le matériau constitutif de ces ailettes et leur dimension de façon que leur effet sur le signal de différence de température soit négligeable.

Un tel dispositif de mesure, à écoulements thermiques dans le sens radial à l'intérieur du corps chauffé par absorption du rayonnement et exposition directe de la totalité de la surface externe du corps à un réfrigérant, a une température de puits de chaleur uniforme sur cette surface externe aussi bien le long des portions de diamètre courant que de portions de section droite réduite. Dans chaque zone de mesure, l'écoulement thermique radial est tel que les parties de petit diamètre sont plus froides que les parties du corps de diamètre courant qui leur sont adjacentes. En réponse à cette différence de température, le thermocouple associé fournit un signal qui est une fonction directe du diamètre externe courant du corps. Etant donné que l'espace disponible pour le détecteur dans un réacteur à eau bouillante est plus important que dans un réacteur à eau sous pression, on peut obtenir des différences de température allant jusqu'à 22 °C en utilisant des corps de diamètre accru. Par comparaison, la différence de température que l'on obtient dans les détecteurs à écoulement thermique radial adaptables à l'espace réduit disponible dans un réacteur à eau sous pression est d'environ 4 °C.

L'un des avantages des détecteurs de mesure à absorption de rayonnement γ mentionnés dans les documents antérieurs cités plus haut réside dans leur aptitude à être électriquement calibrés ou étalonnés en faisant passer un courant électrique tout le long du corps monobloc allongé du détecteur de façon à dégager dans sa masse de la chaleur qui simule la chaleur dissipée par le rayonnement γ lors du fonctionnement du détecteur. Etant donné que les parties de diamètre réduit du corps de détecteur ont une résistance électrique accrue, et que donc la dissipation de chaleur y est plus importante que dans les parties de grand diamètre, l'effet de chauffage électrique serait inverse de l'effet de chauffage par rayonnement γ. Pour conserver la possibilité d'étalonnage électrique direct dans le cas d'un détecteur à flux thermique radial, l'invention propose un processus qui rend la dissipation thermique par voie électrique sensiblement constante dans toute la masse du corps.

L'une de ces mesures consiste à remplir partiellement les espaces annulaires délimités par les parties de diamètre réduit du corps, au cours de l'étalonnage, en utilisant une quantité déterminée de charge à bas point de fusion, présentant une conductivité thermique et électrique élevée. On choisit la masse de charge de façon à égaliser la chute de tension par unité de longueur dans les parties de diamètre réduit et de diamètre courant du corps. Il est nécessaire d'utiliser une charge en matériau ayant une conductivité thermique élevée de façon à rendre négligeable toute chute de température additionnelle le long de trajets radiaux au cours de la génération thermique d'étalonnage. Une fois l'étalonnage terminé, on fait fondre la charge.

L'invention sera mieux comprise à la lecture de la description qui suit de dispositifs qui en constituent des modes particuliers de réalisation, donnés à titre d'exemples non limitatifs.

La description se réfère aux dessins qui l'accompagnent, dans lesquels :

La figure 1 est une vue en élévation et en coupe partielle montrant une installation de dispositif de mesure suivant l'invention dans un réacteur à eau bouillante ;

La figure 2 est une vue à grande échelle en coupe suivant le plan 2-2 de la figure 1 ;

La figure 3 est une coupe axiale suivant le plan 3-3 de la figure 2 ;

La figure 4 est une représentation graphique du gradient de température dans une fraction du détecteur de la figure 3 ;

La figure 5 est une vue en coupe longitudinale partielle d'un détecteur équipé en vue d'un calibrage électrique avant installation ;

La figure 6 est une représentation graphique de la chute de tension le long du corps du détecteur lors du calibrage électrique ;

La figure 7 est une représentation graphique des courbes de calibrage obtenues par calibrage suivant l'invention.

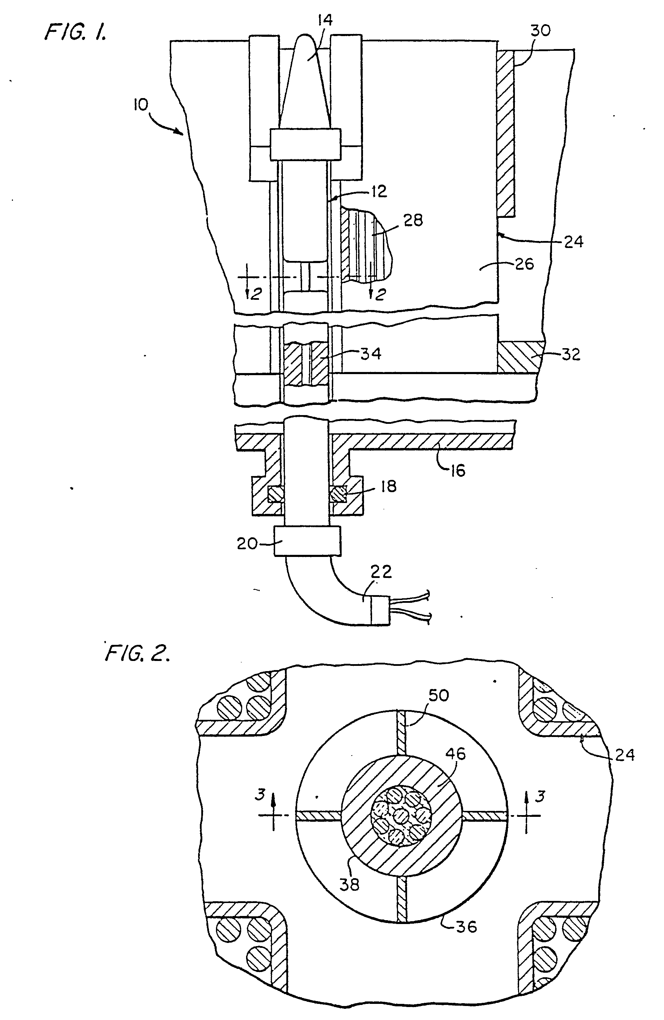

L'installation 10 pour réacteur à eau bouillante montrée en figure 1 utilise un détecteur du type thermomètre γ, désigné dans son ensemble par la référence 12. Le détecteur 12 est inséré dans le réacteur à partir du haut à l'aide d'un cône d'accrochage 14, de façon déjà connue par le technicien. Lorsque le détecteur est en place, sa partie basse traverse le fond 16 du caisson du réacteur à travers un joint haute pression 18 et elle est reliée par un connecteur embrochable 20 à un câble de signal qui s'étend jusqu'à l'emplacement de l'instrumentation du réacteur.

On voit que le détecteur 12 est placé verticalement entre des assemblages de combustible adjacent 24 délimitant des canaux verticaux 26 contenant des faisceaux de crayons de combustible 28. Ces assemblages de combustible s'étendent verticalement dans le caisson du réacteur entre une structure guide de tête 30 et une grille basse 32 d'où le détecteur déborde vers le bas. Certains des produits de fission provenant des crayons de combustible au cours de la génération de puissance, sous forme de rayonnement γ, sont détectés par le détecteur 12 en plusieurs zones de mesure écartées dans le sens vertical. En pratique, on prévoit entre quatre et dix zones de mesure à partir desquelles on effectue des mesures de génération de puissance locale à l'aide de chaque détecteur. Le diamètre externe du détecteur est aussi grand que cela est pratiquement possible dans l'espace disponible entre les assemblages de combustible adjacents. L'extérieur du détecteur est exposé à la masse de réfrigérant dans le caisson du réacteur de façon à lui donner une température uniforme de puits de chaleur.

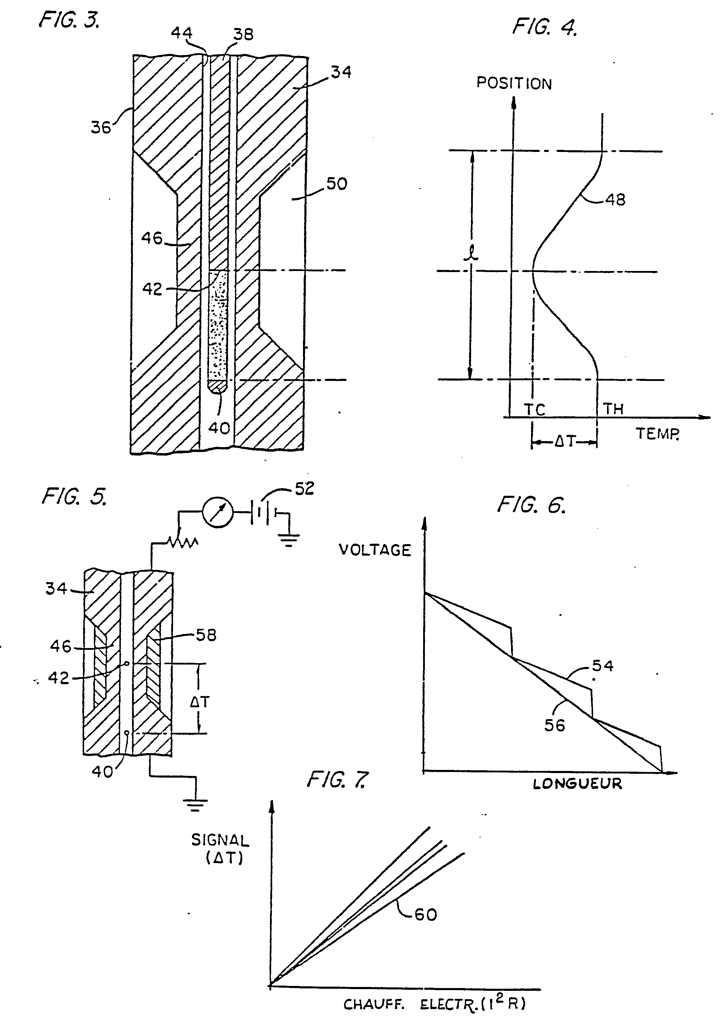

Les figures 2 et 3, qui montrent une fraction du détecteur γ 12 à grande échelle, font apparaître qu'un corps monolithique absorbant le rayonnement γ 34 est prévu. Ce corps est en un matériau tel que l'acier inoxydable 316 ou l'alliage de zirconium connu sous le nom de « zircaloy », dans lequel de la chaleur est générée par le rayonnement γ sans modification de propriétés. La chaleur ainsi générée s'écoule radialement vers la surface externe 36 du corps 34 maintenue à une température de puits de chaleur par le réfrigérant, tel que de l'eau, en contact direct avec tout le corps. Plusieurs câbles de thermocouple à deux jonctions 38 sont montés à l'intérieur du corps 34 et reliés aux câbles de signal 22, de façon à mesurer les températures différentielles en des zones de mesure réparties axialement et dont l'une est montrée en figures 2 et 3. Le détecteur est donc associé à des jonctions 40 et 42 de thermocouple différentiel dans chaque zone de mesure, comme le montre la figure 3.

Les câbles de thermocouple sont disposés dans un trou central 44 pratiqué dans le corps allongé 34, suivant l'axe. Le corps a une forme générale cylindrique de diamètre constant sur la majeure partie de sa longueur. Ce caractère cylindrique est interrompu en des parties de section réduite 46 placées à l'intérieur de chaque zone de mesure. Les interruptions axiales du corps dans l'ensemble de diamètre constant, constituées par les parties 46 de diamètre réduit, constituent des régions froides dans lesquelles sont placées les jonctions 42 de thermocouple. Cette configuration se traduit par une courbe de température dans la zone de mesure du genre montré en 48 sur la figure 4.

Les figures 3 et 4 montrent que la jonction froide 42 est placée à peu près à mi-longueur de la région froide entourant la partie de diamètre réduit 46. La jonction chaude 40 placée à proximité du bout du câble de thermocouple 38 est dans la partie de diamètre constant du corps 34, à proximité de la partie 46 de diamètre réduit et à distance de la jonction froide 42. Ainsi, les mesures de température effectuées à l'aide du câble de thermocouple sont influencées par l'écoulement thermique radial et unidimensionnel dans le corps 34, au cours du fonctionnement du réacteur, aux emplacements axiaux des jonctions de thermocouple 40 et 42. La différence de température $\Delta T$ entre l'intérieur du corps 34 et la surface formant puits thermique pour une telle disposition à écoulement thermique radial est approximativement $\delta t_r = qr^2/4k$, alors que l'équation applicable dans le cas d'un écoulement thermique axial est $\delta t_a = qL^2/8k$.

Dans les équations ci-dessus, q est le débit thermique provoqué par l'absorption du rayonnement γ, r est le rayon de la partie de grand diamètre du corps, k est sa conductivité thermique et L est la longueur axiale de la partie de diamètre réduit du corps. Ainsi, pour des réacteurs à eau sous pression comme à eau bouillante, le signal de différence de température obtenue fourni par un détecteur à écoulement thermique axial est une fonction de la longueur axiale de la partie de diamètre réduit du corps chauffant du détecteur. Lorsqu'on utilise un détecteur à écoulement thermique radial suivant la présente invention, le signal de différence de température obtenu est fonction uniquement du diamètre externe du corps du détecteur. En conséquence, l'utilisation d'un diamètre de détecteur accru, rendu possible par l'espace plus important disponible dans un réacteur à eau bouillante (par comparaison avec un réacteur à eau sous pression), rend possible théoriquement d'obtenir un signal de sortie différentiel plus important. En fait, la mesure de différence de température à l'aide du détecteur à écoulement thermique radial atteint 4 °C dans un réacteur à eau sous pression et 22 °C dans un réacteur à eau bouillante.

Les équations ci-dessus ne sont qu'approximatives, étant donné qu'elles omettent un facteur négligeable qui dépend du rayon de la partie de diamètre réduit du corps du détecteur et ne prennent pas en considération les pertes thermiques qui ne sont minimales que pour le détecteur à écoulement thermique radial. Ces pertes thermiques sont évitées car la totalité de la surface externe du corps 34 est en contact thermique direct avec le réfrigérant, ce qui crée une température de puits de chaleur uniforme. On obtient ainsi une mesure de signal différentiel représentatif de la génération locale de puissance qui est plus précise et plus fiable. Le seul inconvénient peut être constitué par la limitation apportée à la valeur de la différence de température par l'espace plus restreint disponible pour le détecteur dans un réacteur à eau sous pression.

L'importance de cet inconvénient dépend du niveau de bruit rencontré.

On a montré ci-dessus que les dimensions de la partie de diamètre réduit 46 du détecteur 12 sont sans effet notable en ce qui concerne le niveau de signal. Par contre, ces dimensions affectent la résistance mécanique du détecteur. Pour renforcer le détecteur et contre-balancer l'affaiblissement dû aux parties de diamètre réduit, on peut prévoir des ailettes radiales 50, du genre montré en figure 2. Ces ailettes sont en un matériau de résistance mécanique élevée et de conductivité thermique élevée de façon à avoir un effet négligeable sur la température de puits thermique et l'écoulement radial de chaleur.

La précision des mesures effectuées à l'aide des détecteurs 12 dépend du calibrage avant mise en place. Le calibrage est effectué en faisant passer un courant électrique dans le sens longitudinal dans le corps 34 du détecteur en le reliant à une source d'énergie électrique 52 (figure 5), ce qui provoque un échauffement électrique interne du corps. La chute de tension le long du corps du détecteur n'est normalement pas uniforme, comme le montre la courbe 54 sur la figure 6, du fait de la résistance électrique accrue des parties de diamètre réduit 46. Ce problème est écarté et la chute de tension est rendue uniforme, comme l'indique la courbe 56, en créant des trajets de courant en parallèle avec les parties de diamètre réduit 46 du corps lors du chauffage électrique en vue du calibrage. On peut notamment placer un anneau de remplissage annulaire 58 autour des parties de diamètre réduit du corps, comme le montre la figure 5. La charge est en un matériau de conductivité thermique électrique élevée, ayant un point de fusion bas. On peut notamment utiliser la soudure à l'argent. La quantité de charge utilisée est choisie pour rendre la chute de tension par unité de longueur de la partie de diamètre réduit 46 égale à celle le long des parties de grands diamètres, afin d'obtenir la courbe de chute de tension régulière montrée en figure 6. La conductivité élevée de la charge évite tout effet de chauffage additionnel du corps 34. Du fait du bas point de fusion de la charge, on l'enlève aisément par fusion une fois le calibrage terminé.

Le corps 34 étant chauffé électriquement après avoir été préparé comme on l'a indiqué plus haut, on obtient un signal de différence de température $\Delta T$ entre les jonctions de thermocouple 40 et 42, comme le montre la figure 5.

On fait varier le courant de chauffage de façon à tracer la variation du signal $\Delta T$ en fonction du chauffage par le courant, comme indiqué par les courbes de calibrage 60 de la figure 7. La pente de ces courbes, déterminée pour chaque détecteur individuellement, représente un coefficient de sensibilité en °C par watt et par gramme de matériau constitutif du corps. En pratique, le coefficient de sensibilité pour les détecteurs à écoulement thermique radial est compris entre 4 et 40 °C par watt par gramme de matériau constitutif du corps.

**Revendications**

1. Dispositif de mesure de génération locale de puissance dans un réacteur nucléaire, comprenant un corps (34) en matériau conducteur de la chaleur et de l'électricité absorbant le rayonnement $\gamma$, de forme allongée suivant un axe, ayant une surface externe, formant puits de chaleur, en contact direct avec le réfrigérant du réacteur, ledit corps étant percé d'un passage central (44) dans lequel sont placés des moyens à thermocouple comportant des jonctions (40, 42) de mesure de différence de température en plusieurs zones de mesure locale, réparties le long de l'axe, le corps présentant, dans chacune des zones de mesure, une partie (46) de diamètre réduit du corps allongé (34) pour créer une perturbation de la résistance thermique électrique du corps se traduisant par un écoulement thermique radial dans la région desdits moyens et par une différence de température fonction de la puissance locale entre les jonctions (40, 42), la jonction froide (42) étant alignée avec la partie (46) de diamètre réduit et la jonction chaude (40) étant placée en face d'une partie du corps (34) située à proximité de la perturbation c'est-à-dire de la partie à section réduite, caractérisé en ce qu'il comprend des ailettes de renforcement (50) en matériau à conductivité thermique élevée, s'étendant radialement à partir des parties (46) de diamètre réduit.

2. Procédé de calibrage d'un dispositif suivant la revendication 1, suivant lequel on fait passer un courant électrique de chauffage le long du corps (34) pour le chauffer, on mesure la différence de température entre les deux jonctions (40, 42) et on fait varier le courant de chauffage pour déterminer la relation entre la chaleur générée dans le corps et la différence de température mesurée, caractérisé en ce que l'on ajoute une charge (58) de matériau électriquement meilleur conducteur que le matériau du corps 34, par exemple de la soudure à l'argent pour un corps en zircaloy ou en acier inoxydable 316, dans la partie de diamètre réduit du corps avant de faire passer le courant électrique de chauffage dans le corps (34) de façon à rendre uniforme la chute de tension par unité de longueur et en ce qu'on retire la charge du corps une fois le calibrage terminé.

3. Procédé selon la revendication 2, caractérisé en ce que la charge (58) est en matériau à bas point de fusion de façon à pouvoir l'enlever par fusion.

## Claims

1. A device for measuring local power generation within a nuclear reactor, comprising a gamma radiation absorbing body (34) of heat conductive and electrically conductive material of elongated shape along an axis, having an external surface which constitutes a heat sink in direct contact with the reactor coolant, said body being formed with a central passage (44) in which differential temperature sensing junctions (40, 42) of thermocouple means are located at a plurality of local measuring zones distributed along the axis, the body having, in each of the measuring zones, a reduced diameter portion (46) of the elongated body (34) for generating a deviation of the thermal and electrical resistance of the body which is reflected by a radial thermal flow in the zone of said means and by a differential temperature which is in relation with the local power between the junctions (40, 42), the cold junction (42) being aligned with the reduced diameter portion (46) and the hot junction (40) confronting a portion of the body (34) which is located close to the deviation, that is to the reduced cross-section portion, characterized in that it comprises strengthening fins (50) of high thermal conductivity material extending radially from the portions (46) of reduced diameter.

2. A method of calibrating a device according to claim 1, comprising the steps of circulating an electrical heating current longitudinally through the body (34) for heating it, measuring the temperature differential between the two junctions (40, 42) and varying the heating current for determining the relationship between heat generated within the body and the measured temperature differential, characterized in that a load (58) of a material which has a higher electrical conductivity than the material of body (34), for instance silver solder, for a body of zircaloy or 316 stainless steel is added into the reduced diameter portion of the body before the electrical heating current is circulated through the body (34) to render the voltage drop per unit length uniform and the load is removed from the body upon completion of calibration.

3. Method according to claim 2, characterized in that the load (58) is made of a low melting temperature material to effect said removal by melting.

## Patentansprüche

1. Vorrichtung zur Messung der örtlichen Leistungserzeugung in einem Kernreaktor, mit einem Körper (34) aus wärme und elektrisch leitfähigem Material, das Gammastrahlung absorbiert, eine sich längs einer Achse erstreckende Form aufweist, eine äußere Oberfläche hat, die eine Wärmesenke bildet und unmittelbar mit dem Kühlmittel des Reaktors in Berührung steht, wobei der Körper von einem mittleren Kanal (44) durchsetzt ist, in dem Thermoelementmittel angeordnet sind, die Verbindungsstellen (40, 42) zur Temperaturdifferenzmessung in mehreren örtlichen Meßzonen aufweisen, die längs der Achse verteilt sind, wobei der Körper in jeder der Meßzonen einen Abschnitt (46) mit verringertem Durchmesser des langgestreckten Körpers (34) aufweist, um eine Störung des thermischen elektrischen Widerstands des Körpers zu erzeugen, was sich durch eine radiale Wärmeströmung im Bereich der erwähnten Mittel und durch eine Temperaturdifferenz in Abhängigkeit von der örtlichen Leistung zwischen den Verbindungsstellen (40, 42) äußert, wobei die Kalte Verbindungsstelle (42) mit dem Abschnitt (46) verringerten Durchmessers fluchtet und die warme Verbindungsstelle (40) vor einem Abschnitt des Körpers (34) angeordnet ist, der in der Nähe der Störung liegt, d. h. des Abschnitts mit verringertem Querschnitt, dadurch gekennzeichnet, daß sie Versteifungsrippen (50) aus einem Material mit höherer thermischer Leitfähigkeit aufweist, die sich radial von dem Abschnitt (46) verringerten Durchmessers aus erstrecken.

2. Verfahren zum Kalibrieren einer Vorrichtung nach Anspruch 1, bei dem ein elektrischer Heizstrom längs des Körpers (34) geleitet wird, um diesen zu erwärmen, die Temperaturdifferenz zwischen den beiden Verbindungsstellen (40, 42) gemessen wird und der Heizstrom geändert wird, um das Verhältnis zwischen der in dem Körper erzeugten Wärme und der gemessenen Temperaturdifferenz zu bestimmen, dadurch gekennzeichnet, daß vor dem Durchleiten des elektrischen Heizstroms durch den Körper (34) eine Füllung (58) aus einem elektrisch besser leitfähigen Material als das Material des Körpers (34), z. B. aus Silberlot bei einem Körper aus Zircaloy oder aus nichtoxidierbarem Stahl 316, in den Abschnitt geringeren Durchmessers eingebracht wird, so daß sich ein gleichförmiger Spannungsabfall pro Längeneinheit ergibt, und daß die Füllung aus dem Körper entfernt wird, wenn die Kalibrierung abgeschlossen ist.

3. Verfahren nach Anspruch 2, dadurch gekennzeichnet, daß die Füllung (58) aus einem Material mit niedrigem Schmelzpunkt besteht, so daß sie durch Schmelzen entfernt werden kann.

FIG. I.

FIG. 2.

# 0 064 446

**FIG. 3.**

**FIG. 4.**

**FIG. 5.**

**FIG. 6.**

**FIG. 7.**

2